# EUROPÄISCHE PATENTANMELDUNG

(11) **EP 0 925 961 A1**
(43) Veröffentlichungstag der Anmeldung: **30.06.1999**
(21) Anmeldenummer: 98123945.2
(22) Anmeldetag: 17.12.1998
(51) Int. Cl.: B60D 1/167, B60D 1/06

(54) **Deichselhaube**

(30) Priorität: 19.12.1997 DE 29722418 U
(71) Anmelder: AL-KO KOBER AG, D-89359 Kötz (DE)
(72) Erfinder: Wöhrle, Rudolf, 89335 Ichenhausen-Rieden (DE); Werdich, Anton, 89346 Bibertal-Anhofen (DE); Müller, Andreas, 89312 Günzburg-Denzingen (DE)
(74) Vertreter: Ernicke, Klaus Stefan

(57) **Zusammenfassung**

Die Erfindung betrifft eine Deichselhaube (2) für eine Deichselanordnung (1) von Anhängerfahrgestellen. Die Deichselhaube (2) ist als tragendes Hohlteil ausgebildet und wird mit den Vorderenden der Deichselholme (3) verbunden. Sie besitzt ein gewölbtes Haubenteil (10) und ein Bodenteil (11), die als lasttragenden Teile ausgebildet und fest miteinander verbunden sind. Die Deichselhaube (2) nimmt Teile der Anhängevorrichtung (4) und der Auflaufbremsvorrichtung (6) auf.

## Beschreibung

Die Erfindung betrifft eine Deichselhaube mit den Merkmalen im Oberbegriff des Hauptanspruchs.

In der Praxis ist es bekannt, die Deichselholme einer starren Anhängerdeichsel am Vorderende durch ein einfaches aufgeschweißtes Blech miteinander zu verbinden. Die Teile der Anhängevorrichtung, der Auflaufbremsvorrichtung und der Handbremseinrichtung sind dabei an den Deichselholmen bzw. an dem Blech befestigt. Die Stützradanordnung ist ebenfalls an einem Deichselholm außenseitig befestigt. Für die Auflaufbremsvorrichtung ist auf dem Blech ein Vierkantgehäuse aufgeschweißt, das eine Lagerkartusche für das Zugrohr aufnimmt. Die vorbekannte Deichselanordnung besteht aus einzelnen Maschinenelementen, die nur auf ihre Funktion abgestimmt sind und kaum einem gestalterischen Einfluß unterliegen. In der Praxis ist es bekannt, über das Vorderende der Deichselanordnung eine Plastikkappe zu stülpen, mit der das Design etwas verbessert wird. Diese Kappe bietet lediglich einen Sichtschutz und hat keinerlei weitergehende technische Funktion und Ausbildung.

Es ist Aufgabe der vorliegenden Erfindung, eine gestalterische und technische Verbesserung der Deichselanordnung zu ermöglichen.

Die Erfindung löst diese Aufgabe mit den Merkmalen im Hauptanspruch.
Die erfindungsgemäße Deichselhaube kann durch ihre Ausbildung als tragendes Hohlteil sowohl technische, wie auch gestalterische Funktionen und Vorteile bieten. In die Deichselhaube können die anderen Teile oder Bedienelemente der Deichselvorrichtung, insbesondere die Anhängevorrichtung, die Auflaufbremsvorrichtung, die Handbremseinrichtung und die Stützradeinrichtung formschön integriert werden, wobei sich innerhalb des Hohlteiles auch ein Großteil der Maschinenelemente verbergen läßt. Die Deichselhaube kann eine formschöne Gestaltung haben und dadurch das Design der Deichselanordnung wesentlich verbessern. Dabei ist es insbesondere auch möglich, die Deichselhaube im Design an das Zugfahrzeug und/oder den Anhänger anzupassen und dadurch das gesamte Erscheinungsbild des Zuges oder des Anhängers zu verbessern. Die Deichselhaube kann dazu auch mit weiteren einfachen Zusatzabdeckungen im weiteren Deichselbereich kombiniert werden.

Die erfindungsgemäße Deichselhaube hat eine tragende Funktion und verbindet vorzugsweise die Vorderenden der Deichselholme. Sie ermöglicht eine bessere Integration und gegenseitige Abstimmung von funktionellen Bauteilen und Bedienungselementen der Deichselanordnung. Dies verbessert zum einen die Funktion dieser Bauteile, z.B. der Auflaufbremsvorrichtung, der Handbremseinrichtung oder der Stützradeinrichtung und ermöglicht es andererseits, mit weniger Teilen und mit weniger Bearbeitungs- und Montageaufwand auszukommen. Günstigerweise ist eine "Oben-Montage" vorgesehen.

Insbesondere der Bauaufwand für die Auflaufbremseinrichtung kann verringert werden, indem die Rohraufnahme für das Zugrohr direkt mit dem Bodenteil der Deichselhaube verbunden wird. Die Rohraufnahme kann dabei eine Doppelfunktion haben, indem sie unter Überbrückung der schlitzförmigen Bodenteilöffnung das Bodenteil stabilisiert und Kräfte überträgt.

Die Deichselhaube ermöglicht es ferner, den Stoßdämpfer für die Auflaufbremsvorrichtung im Zugrohr unterzubringen und dabei austauschbar zu befestigen. Der Stoßdämpfer kann im aufgebauten Zustand gewechselt werden, ohne daß die Bremseinrichtung wieder demontiert und neu eingerichtet werden muß.

Durch die bessere Integration der Bauteile in der Deichselhaube kann auch die Handbremseinrichtung verbessert werden. Für Radbremsen, die bei Rückwärtsfahrt ausweichen und die Bremswirkung aufheben, ist ein Federspeicher vorhanden, der dank der Deichselhaube in den vorderen Deichselbereich integriert und dabei mittig angeordnet werden kann. Seine Funktion und Wirkung wird dadurch verbessert.

Vorteile ergeben sich auch für die Stützradeinrichtung. Sie kann ebenfalls dank der tragenden Ausbildung an der Deichselhaube befestigt werden. Dabei ergeben sich auch günstigere Befestigungs- und Verstellmöglichkeiten sowie eine bessere Führung und Stabilität als beim Stand der Technik. Außerdem ist eine Verlegung der Stützradeinrichtung nach innen in den geschützten Bereich zwischen den Deichselholmen möglich. Die Deichselhaube kann auch für eine Führung des in Ruhestellung eingeklappten oder angehobenen Stützrades sorgen. Außerdem kann auf einen zusätzlichen Abstützbügel für das Rad verzichtet werden. Bei Verwendung eines geeigneten und vorzugsweise verstellbaren Rangiergriffs kann der Anhänger besser und genauer rangiert werden.

In den Unteransprüchen sind weitere vorteilhafte Ausgestaltungen der Erfindung angegeben.

Die Erfindung ist in den Zeichnungen beispielsweise und schematisch dargestellt. Im einzelnen zeigen:
- Figur 1: : eine teilweise geschnittene Seitenansicht einer Deichselanordnung mit einer Deichselhaube, einer Anhängevorrichtung, einer Auflaufbremsvorrichtung und einer Handbremseinrichtung;
- Figur 2: : eine Draufsicht auf die Deichselanordnung von Figur 1, wobei zusätzlich eine Stützradeinrichtung zu sehen ist;
- Figur 3: : eine Frontansicht der Deichselanordnung von Figur 1 und 2;
- Figur 4: : eine Querschnittsdarstellung der Stützradbefestigung an der Deichselhaube;
- Figur 5 bis 7: : die Deichselhaube in Draufsicht, geklappter Seitenansicht und Stirnansicht;
- Figur 8 und 9: : den Handbremshebel in Seitenansicht und Draufsicht,
- Figur 10 bis 12: : die Rohraufnahme für das Zugrohr in Längschnitt, Draufsicht und Stirnansicht und
- Figur 13 und 14: : das Stützrad mit einem verstellbaren Rangiergriff in Seitenansicht und Draufsicht.

In den Zeichnungen ist eine Deichselanordnung (1) für einen Fahrzeuganhänger dargestellt. Hierbei handelt es sich vorzugsweise um eine starre Deichsel von Anhängerfahrgestellen für Wohnwagen, Pritschenanhänger oder dergleichen.

Die Deichselanordnung (1) besteht vorzugsweise aus zwei V-förmig angeordneten Deichselholmen (3), die zugleich die Längsholme des Anhängerfahrgestells bilden können oder in diese übergehen. Die Deichselholme (3) sind am vorderen zugfahrzeugseitigen Ende vorzugsweise durch eine nachfolgend näher beschriebene Deichselhaube (2) verbindbar.

Zur Deichselanordnung (1) gehören ferner eine Anhängevorrichtung (4) mit einer Kupplung (5) zur Verbindung mit einem Zugfahrzeug. Hierbei handelt es sich vorzugsweise um eine Kugelkopfkupplung. Außerdem besitzt die Deichselanordnung (1) vorzugsweise eine Auflaufbremsvorrichtung (6) und eine Handbremseinrichtung (8), die über einen Bremszug (7) auf die Radbremsen (nicht dargestellt) des Anhängers einwirken. Die Deichselanordnung (1) kann ferner noch eine Stützradeinrichtung (9) umfassen.

Die Deichselhaube (2) ist als tragendes Hohlteil oder Gehäuse ausgebildet und verbindet die Vorderenden der Deichselholme (3). Dabei überdeckt sie vorzugsweise die Deichselholme (3). Die Deichselhaube (2) kann die über die Deichsel eingeleiteten Belastungen aufnehmen und Kräfte übertragen. Sie besitzt ein nach oben gewölbtes hohles Haubenteil (10) und ein Bodenteil (11). Das Haubenteil (10) übergreift das Bodenteil (11). Beide Teile (10,11) sind als lasttragende Teile ausgebildet und fest miteinander verbunden.

Das Bodenteil (11) ist mit den Obergurten der Deichselholme (3) verbindbar, was vorzugsweise über eine lösbare Schraubverbindung geschieht. Die Deichselhaube (2) ist vorzugsweise als Blechteil aus Stahlblech oder dergleichen ausgebildet. Sie kann auch aus einem anderen geeigneten Material, z.B. einem entsprechend festen Kunststoff oder einem Verbundmaterial bestehen. Das Haubenteil (10) und das Bodenteil (11) können in beliebig geeigneter Weise durch Schweißen, Klemmen oder dergleichen fest miteinander verbunden sein. Die Deichselhaube (2) kann auch unter Integration von Hauben- und Bodenteil (10,11) einstückig ausgebildet sein.

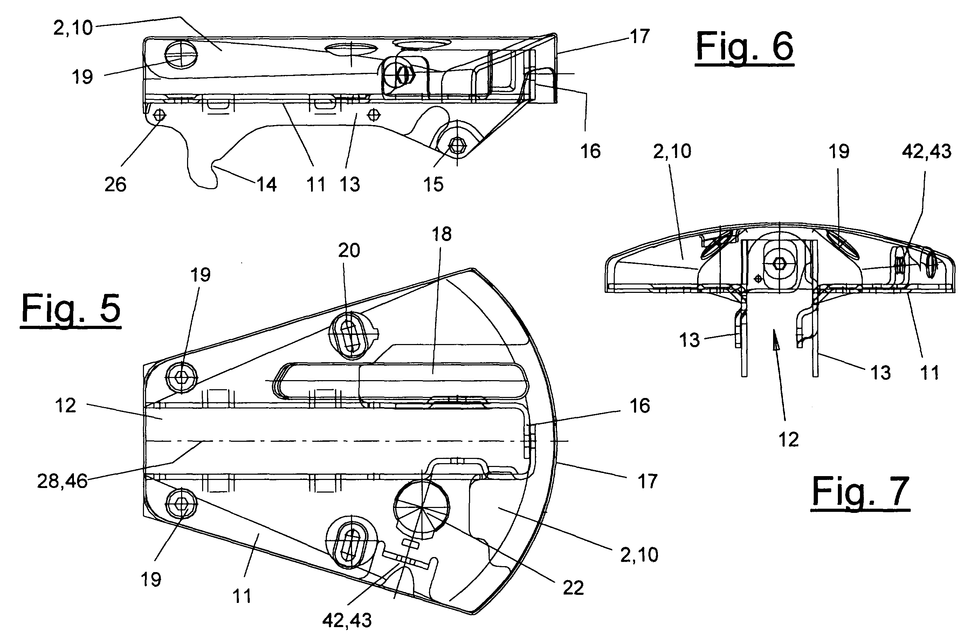

Die Deichselhaube (2) bildet ein weitgehend geschlossenes hohles Gehäuse mit wenigen Öffnungen. Wie Figur 5 bis 7 verdeutlichen, hat das Bodenteil (11) mittig eine Öffnung (12), die vorzugsweise schlitzförmig ausgebildet ist und sich längs der Zugachse (46) erstreckt. Sie dient zur Aufnahme von Teilen der Anhängevorrichtung (4) und der Auflaufbremsvorrichtung (6). Beidseits der Bodenöffnung (12) sind nach unten abgewinkelte vorstehende Bodenflansche (13) angeordnet. Diese können in der nachfolgend näher beschriebenen Weise eine Federaufnahme (14) für einen Federspeicher (32) und eine Hebelaufnahme (15) für die Handbremseinrichtung (8) aufweisen. Die Bodenflansche (13) haben eine den Anbauteilen entsprechende geschwungene Kontur und können seitliche Einbauchungen oder Ausprägungen aufweisen.

Zusätzlich können weitere Bodenflansche im Haubeninnenraum nach oben ragen. Sie dienen z.B. als seitliche Führung und/oder Befestigungsmöglichkeit für Bauteile der Deichselanordnung (1) im Innenraum, z.B. der Auflaufbremsvorrichtung (6) oder dgl., insbesondere der nachfolgend näher beschriebenen Zugrohraufnahme (25).

Das Bodenteil (11) kann einstückig oder mehrteilig ausgebildet sein. In der bevorzugten Ausführungsform besteht es aus zwei Hälften, die entsprechend zugeschnitten sowie gebogen sind und Ausnehmungen zur Bildung der Bodenöffnung (12) haben. Die beiden Hälften sind spiegelbildlich gestaltet und werden miteinander mittig im Öffnungsbereich (12) durch die Zugrohraufnahme (25) und hinten durch eine Schraubverbindung (30) an einer hochstehenden Rückwand (16) (Überlappung der Wandteile) verbunden. Letztere dient außerdem zur nachfolgend näher beschriebenen Befestigung eines Stoßdämpfers (29). An den Außenrändern sind die Bodenteilhälften mit den unteren Rändern des Haubenteils (10) fest verbunden, z.B. verschweißt.

Die Bodenöffnung (12) befindet sich in der Grundplatte des Bodenteils. Sie ist am rückwärtigen Ende geschlossen, wobei zumindest in diesem Bereich das Bodenteil (11) eine hochstehende Rückwand (16) aufweisen kann. Außerdem kann das Bodenteil (11) seitlich neben der Öffnung (12) einen hochstehenden Befestigungsflansch (42) für die nachfolgend näher beschriebene Stützradbefestigung (23) haben.

Das Haubenteil (10) kann eine beliebig geeignete Querschnittsform aufweisen. Es kann eine rechteckige, polygonale, gerundete oder gewölbte Form sein. Am Vorderende ist eine angepaßte Zugangsöffnung für die Anhängevorrichtung (4) bzw. die Auflaufbremsvorrichtung (6) vorhanden. An den Seiten und am rückwärtigen Ende ist der Haubenrand (17) nach unten gezogen und bietet einen geschlossenen Sichtschutz.

Das Haubenteil (10) kann im Design beliebig gestaltet sein. Vorzugsweise ist die Deichselhaube (2) im Design an das Zugfahrzeug und/oder an den Anhänger angepaßt. Dies kann alle gestalterischen Aspekte betreffen, insbesondere Form- und Farbgebung. Die Deichselhaube (2) kann auch am rückwärtigen Ende mit einer Zusatzabdeckung (nicht dargestellt) kombiniert werden, die die rückwärtige Öffnung zwischen den Deichselholmen (3) überdeckt und an den Anhängeraufbau anschließen kann. Die Befestigung der Zusatzabdeckung kann beliebig erfolgen. Sie kann insbesondere auch an der Deichselhaube (2) geklemmt oder eingehängt werden.

Die Anhängevorrichtung (4) kann in beliebig geeigneter Weise ausgebildet sein. Im gezeigten Ausführungsbeispiel hat sie am Vorderende eine Kugelkupplung (5) mit den üblichen Kupplungsteilen. Hier kann auch eine Dämpfeinrichtung für die Schlingerbewegungen des Anhängers angebaut sein. An der Kupplung (5) ist ein Zugrohr (27) befestigt, das über die stirnseitige Öffnung in das Innere der Deichselhaube (2) ragt. Das Zugrohr (27) ist in einer ebenfalls rohrförmigen Zugrohraufnahme (25) längsbeweglich gelagert und geführt.

Diese Lagerkartusche (25) besteht vorzugsweise aus Aluminiumdruckguß mit eingesetzten Führungsbüchsen. Sie hat ein geringes Eigengewicht in Verbindung mit einer hohen Formstabilität und einem hohen Wirkungsgrad. Alternativ kann auch eine Graugußkartusche in verschleißarmer Ausführung mit Notlaufeigenschaften vorhanden sein.

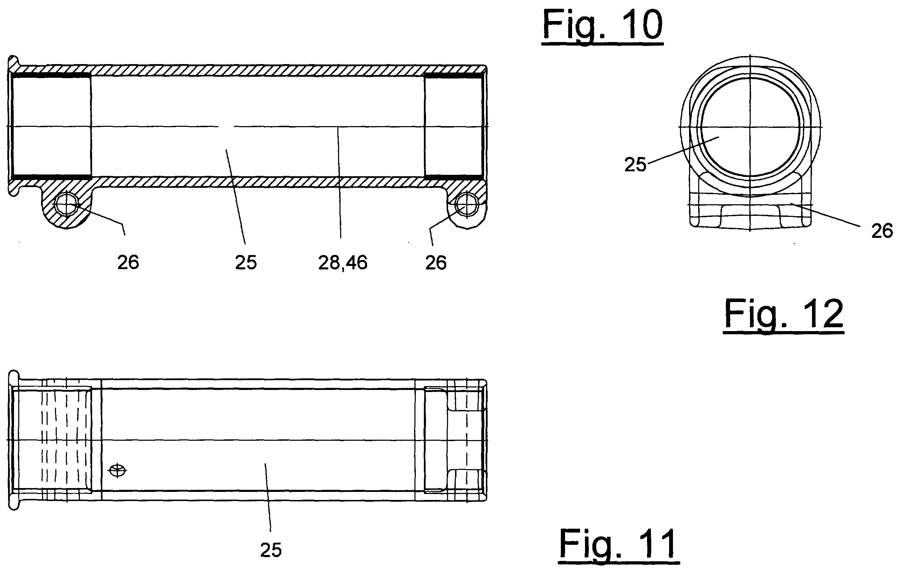

Die Zugrohraufnahme (25) erstreckt sich längs der Zugachse (46) der Deichselanordnung (1) und ist im Bereich der Bodenöffnung (12) angeordnet. Wie Figur 10 bis 12 verdeutlichen, ist die Zugrohraufnahme (25) als steifes, im wesentlichen zylindrisches Rohr ausgebildet, das am unteren Rand zwei Querwülste mit eigenen Befestigungen (26), z.B. Schraubverbindungen, für das Bodenteil (11) bzw. für die Bodenflansche (13) aufweist. Die Zugrohraufnahme (25) ist in oder oberhalb der Bodenöffnung (12) angeordnet und überbrückt die Bodenöffnung (12), wobei sie über den Schlitz hinweg die auf das Bodenteil (11) einwirkenden Kräfte überträgt. Zusammen mit der Zugrohraufnahme (25) bildet das Bodenteil (11) ein starres Teil. Die Zugrohraufnahme (25) kann von unten her in der Bodenöffnung (12) eingesetzt und montiert werden. Sie ist in Baukastenweise gefertigt und kann leicht ausgetauscht und gewartet werden.

Im Zugrohr (27) ist ein Stoßdämpfer (29) parallel zur Rohrachse (28) angeordnet. Dieser ist am Vorderende über ein Querloch mit dem Zugrohr (27) verbunden. Am rückwärtigen Ende ist der Stoßdämpfer (29) über eine Befestigung (30), insbesondere eine Schraubverbindung, lösbar mit dem Bodenteil (11) bzw. dessen Rückwand (16) verbunden. Der Stoßdämpfer (29) kann durch Lösen beider Schraubverbindungen (30) ausgetauscht werden. Bei abgenommener Kupplung (5) kann er nach vorn aus dem offenen Zugrohr (27) herausgezogen und gewechselt, gewartet oder geprüft werden.

Das Zugrohr (27) ist Bestandteil der Auflaufbremsvorrichtung (6), die im weiteren einen schwenkbar gelagerten Umlenkhebel (31) besitzt. Der Umlenkhebel (31) ist gleichachsig mit dem Handbremshebel (35) auf der Hebelachse (37) und innenseitig an der Hebelaufnahme (15) der Bodenflansche (13) gelagert. Der Umlenkhebel (31) schlägt mit seinem obenliegenden Kopf am rückwärtigen Rand oder einem Flansch des Zugrohres (27) an und befindet sich seitlich versetzt neben dem Stoßdämpfer (29). Der Umlenkhebel (31) ragt dabei durch die Bodenöffnung (12). An seinem unteren rückwärtigen Ende ist der Umlenkhebel (31) mit dem Bremszug (7) verbunden, der z.B. als Bremsgestänge, als Seilzug oder dergleichen ausgebildet ist. Der Umlenkhebel (31) überträgt die von der Kupplung (5) über das Zugrohr (27) eingeleiteten Auflaufkräfte auf den Bremszug (7).

Die Handbremseinrichtung (8) besitzt einen Handbremshebel (35) und einen Federspeicher (32), der für Radbremsen vorgesehen ist, die bei Rückwärtsfahrt unter Aufhebung der Bremswirkung ausweichen. Der Handbremshebel (35) ist seitlich neben der Bodenöffnung (12) am einen Bodenflansch (13) über die Hebelaufnahme (15) drehbar gelagert. Er hat am oberen Ende einen abgewinkelten Griff (36) und ist in geeigneter und verkürzter Form für die in den DIN-Normen vorgesehenen Freiräume gestaltet. Der Handbremshebel (35) kann ohne Druckknopf, Klinke und Zahnsegment ausgebildet sein. Er erhält seine Funktion über ein Totpunktsystem in Verbindung mit dem Federspeicher (32). Der Federspeicher drückt den Handbremshebel (35) nach Überschreiten des Totpunktes permanent in Spannstellung und zieht den Bremszug (7) an.

Die Verbindung zum Bremszug (7) erfolgt über einen seitlich vorstehenden Mitnehmer (39) am Handbremshebel (35). Dieser ist etwa in Höhe und mit etwas Abstand hinter der Hebelachse (37) angeordnet. Der Mitnehmer (39) wirkt auf die Rückseite des Umlenkhebels (31) ein und wirkt dadurch auf den Bremszug (7).

Der Federspeicher (32) ist in etwa mittig unterhalb der Bodenöffnung (12) angeordnet und über einen querliegenden Stützbolzen (34) an der Federaufnahme (14) der Bodenflansche (13) abgestützt. Die Federaufnahme (14) ist als offene Halbschalenabstützung ausgebildet. Der Federspeicher (32) besitzt ein Gehäuse mit einer Frontplatte, in dem die vorgespannte Druckfeder angeordnet ist. Die Druckfeder wirkt über eine Mitnehmerplatte auf eine durch den Federspeicher (32) sich ersteckende Stellstange (33) ein. Die Stellstange (33) ragt am vorderen Ende aus dem Federspeichergehäuse heraus und ist am hinteren Ende drehbar an einem Ansatz (38) des Handbremshebels (35) abgestützt.

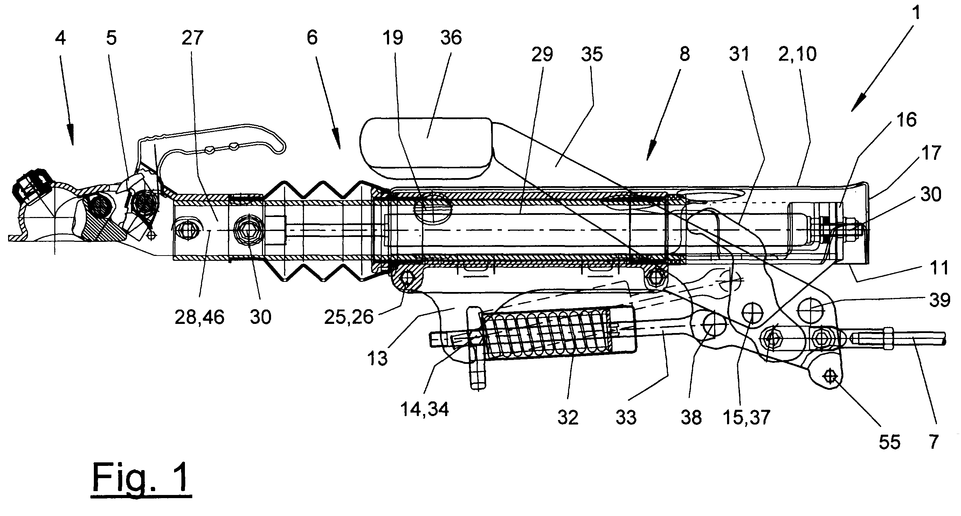

Der Ansatz (38) ragt parallel zum Mitnehmer (39) seitlich vom Handbremshebel (35) ab und befindet sich ein Stück vor und etwas unterhalb der Hebelachse (37). Über den Ansatz (38) wird die Totpunktfunktion bewirkt, wobei sich der Federspeicher (32) in der Federaufnahme (14) über den Stützbolzen (34) drehen kann. Figur 1 zeigt mit durchgezogenen Strichen die Ruhe- oder Lösestellung des abgeschwenkten Handbremshebels (35). In dieser Stellung liegt der Federspeicher (32) im wesentlichen waagrecht, wobei die Federwirklinie unterhalb des Hebellagers (37) verläuft. Sobald der Handbremshebel (35) nach oben geschwenkt wird und mit dem Ansatz (38) über die Hebelachse (37) kommt, wird der Totpunkt überschritten und der Federspeicher (32) drückt den Handbremshebel (35) in die Spannstellung. Diese Stellung des Federspeichers (32) ist in Figur 1 gestrichelt dargestellt. Die Stellstange (33) kann über eine Schalenführung am Ansatz (38) lösbar angreifen. Bei dieser Ausführungsform kann der Federspeicher (32) auf einfache Weise zwischen die Federaufnahme (14) und den Ansatz (38) geklemmt werden.

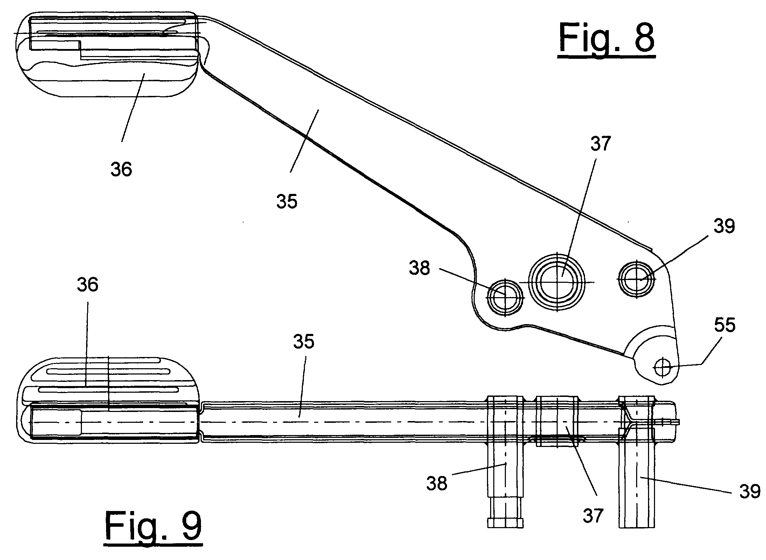

Wie Figur 1, 8 und 13 verdeutlichen, kann der Handbremshebel (35) am unteren rückwärtigen Ende noch eine Öse (55) für das Abreißseil (54) besitzen. Das Abreißseil (54) wird mit dem Zugfahrzeug verbunden und betätigt beim unbeabsichtigten Abkuppeln des Anhängers in Fahrt den Handbremshebel (35) und den Bremszug (7). Diese Öse (55) liegt unterhalb der Hebelachse (37) und unterhalb des Anschlußpunktes des Bremszugs (7) am Umlenkhebel (31). Das Abreißseil (54) kann durch eine Führungsöffnung (47) an der Unterseite des Federspeichers (32) verlegt sein.

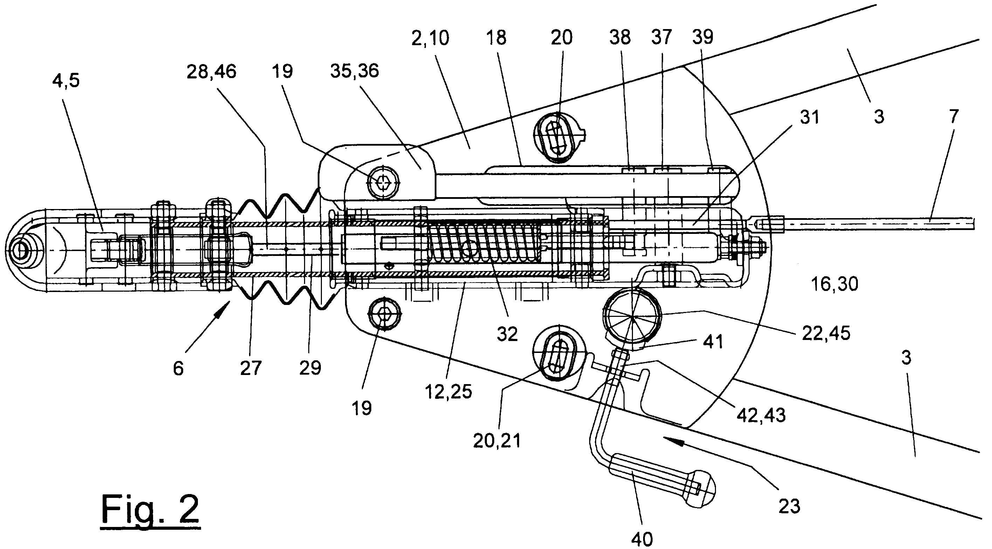

Wie Figur 2, 5, 6 und 14 verdeutlichen, kann das Haubenteil (10) an der Oberseite und auch seitlich mehrere Öffnungen oder Aufnahmen für Bedienelemente und sonstige Teile oder Anbauteile der Deichselanordnung (1) aufweisen. Dies sind z.B. vier Befestigungsöffnungen (19,20), die mit Kappen verschlossen werden können und einen Zugang zu den Befestigungsstellen zwischen dem Bodenteil (11) und dem Deichselholmen (3) bieten. Zur Einstellung der Deichselwinkel sind die vorderen Befestigungsstellen als Kreislöcher ausgebildet. Die hinteren Befestigungsstellen sind als schrägliegende Langlöcher gestaltet. Dementsprechend sind die hinteren Befestigungsöffnungen (20) etwas größer.

Das Haubenteil (10) hat ferner eine Öffnung als Steckeraufnahme (21) für den Elektrostecker der Anhängerkupplung. Die Steckeraufnahme (21) kann zugleich eine der Befestigungsöffnungen (20) sein. Sie kann aber auch separat angeordnet sein. Ferner hat das Haubenteil (10) eine schlitzförmige Hebelöffnung (18) für den Handbremshebel (35).

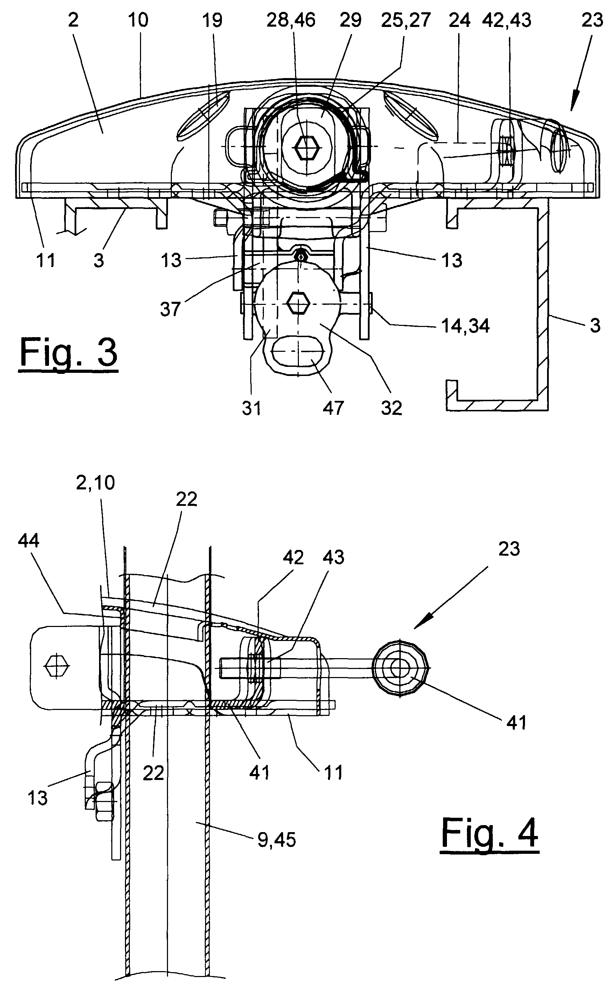

Die Deichselanordnung (1) kann eine Stützeinrichtung (9) besitzen. Diese besteht z.B. aus einem Stützrad (51), das über einen Ausleger (52) an einer Spindel (50) mit Kurbel verbunden ist, die in einem Gehäuse oder Schaft (45) geführt ist. Zusätzlich kann an der Unterseite der Deichselanordnung (1) bzw. der Deichselhaube (2) ein starrer Stützbügel (53) angeordnet sein. Die Stützeinrichtung (9) kann an der Deichselhaube (2) über eine Stützradbefestigung (23) gelagert und verstellbar befestigt sein. Sie befindet sich dabei innerhalb der Deichselholme (3) und braucht keine Verbindung zu den Deichselholmen (3) zu haben. Figur 4 zeigt diese Anordnung im Detail.

Im Haubenteil (10) befindet sich an der Oberseite eine Stützradöffnung (22) für den Durchtritt der Spindel (50) oder des Schafts (45). In gleicher Weise hat auch das Bodenteil (11) eine solche Öffnung. In der Stützradöffnung (22) ist die Spindel mit zeitlichem Spiel geführt. Innenseitig kann die Stützradöffnung (22) einen abgewinkelten Öffnungsrand (44) aufweisen, der als Anlage und Führung für das Spindelgehäuse bzw. den Schaft (45) dienen kann.

Die Stützradbefestigung (23) ist vorzugsweise als Klemmeinrichtung ausgeführt, die eine stufenlose Höhenverstellung und Befestigung der Spindel bzw. des Spindelgehäuses (45) erlaubt. Die Klemmeinrichtung (23) besitzt einen über eine seitliche Haubenöffnung nach außen ragenden Stellgriff (40) oder Knebel, der an einem hochstehenden Befestigungsflansch (42) des Bodenteils (11) über eine Schraubverbindung (43) axial verstellbar gehalten ist. Der Stellgriff (40) trägt am vorderen Ende eine Spannbacke (41), die sich innerhalb der Deichselhaube (2) befindet und gegen das Spindelgehäuse (45) anpreßbar ist bzw. dieses umgreift. Durch Betätigung des Stellgriffs (40) kann das Spindelgehäuse (45) über die Spannbacke (41) gegen den Öffnungsrand (44) gedrückt und dabei eingespannt werden. Zusätzlich findet auch eine Abstützung und Führung an der unteren Stützradöffnung (22) im Bodenteil (11) statt. Die Spannbacke (41) kann abgewinkelt sein und auf der ebenen Oberseite des Bodenteils (11) gleitend geführt sein.

Die Deichselhaube (2) kann gemäß Figur 3, 13 und 14 zur Fixierung des Stützrades (51) in der angehobenen Ruhestellung eine Stützradführung (24) aufweisen. Diese ist z.B. als vertikale Schlitzführung am rückwärtigen Haubenrand (17) ausgebildet. Sie kann alternativ auch als axiale Führungsnut im Bodenteil (11) ausgebildet sein. In beiden Fällen wird das Stützrad (51) in der hochgeschwenkten Stellung umgriffen und längs der Zugachse (46) ausgerichtet.

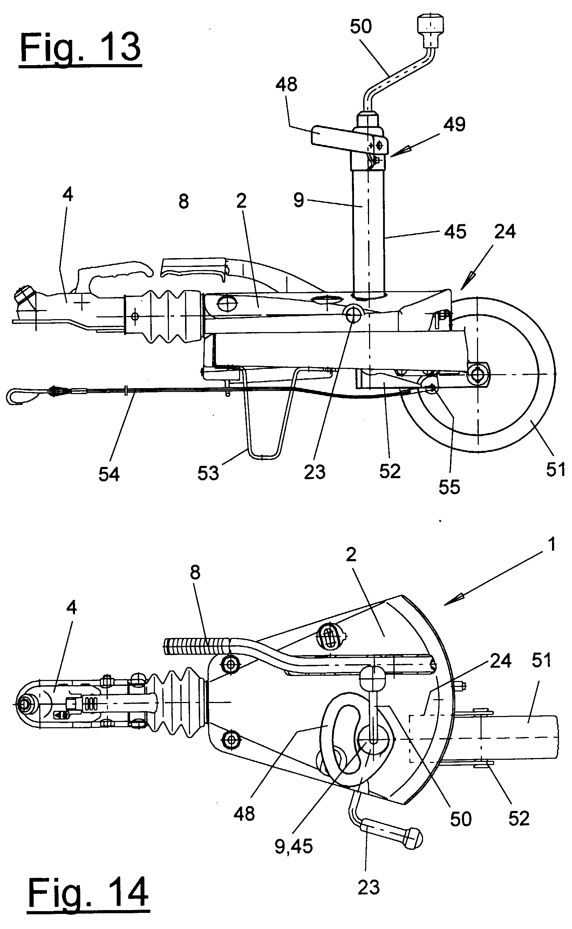

Wie Figur 13 und 14 verdeutlichen, kann an der Stützeinrichtung (9) auch ein Rangiergriff (48) angeordnet sein. Dieser ist z. B. am oberen Ende des Spindelgehäuses oder -schaftes (45) befestigt. Diese Anordnung kann mittels einer Verstelleinrichtung (49) veränderbar sein. Die Verstelleinrichtung (49) besitzt z. B. Schraubbacken, die den Schaft (45) im Klemmschluß umgreifen. Der Rangiergriff ist vorzugsweise zum Vorderende der Deichselanordnung (1) beziehungsweise zur Anhängevorrichtung (4) ausgerichtet und kann griffgünstig als Bügel oder in sonstiger geeigneter Form gestaltet sein. Der Rangiergriff (48) erlaubt ein besseres und einfacheres Rangieren des Anhängers, wobei die eingeleiteten Handkräfte in optimaler Weise über die Stützradbefestigung (23) auf die Deichselhaube (2) und den Anhänger übertragen werden. Hierbei wölbt sich die in Figur 4 gezeigte große Stütz- und Führungslänge der Stützradbefestigung (23) günstig aus. Die Handkräfte werden dabei auch direkt am Stützrad (51) eingeleitet. Zum Rangieren kann der Bediener mit einer Hand am Handgriff der Anhängevorrichtung (4) beziehungsweise Kupplung (5) und mit der anderen Hand am Rangiergriff (48) anfassen. Durch diese ergonomisch günstige Griffanordnung können auch schwere Anhänger oder Anhänger mit Tandemachse leichter und genauer von Hand bewegt werden.

Abwandlungen der gezeigten Ausführungsform sind in verschiedener Weise möglich. Die Deichselhaube (2) kann in ihrer Ausbildung und Gestaltung in beliebig geeigneter Weise variieren. Veränderbar ist auch die Deichselanordnung (1), wobei auch Zahl und Anordnung der Deichselholme (3) veränderbar ist. Die Deichselhaube (2) kann auch bei einer Deichselanordnung (1) eingesetzt werden, die nur eine Anhängevorrichtung (4), aber keine Auflaufbremsvorrichtung (6) und gegebenenfalls auch keine Handbremseinrichtung (8) besitzt. Die Haubenfunktionen und die Haubenausbildung sind dann entsprechend reduziert. Außerdem kann die Deichselanordnung (1) ohne Stützradeinrichtung (9) auskommen. Dementsprechend fehlt dann auch die Stützradbefestigung (23).

### BEZUGSZEICHENLISTE

- 1: Deichselanordnung
- 2: Deichselhaube
- 3: Deichselholm
- 4: Anhängevorrichtung
- 5: Kupplung
- 6: Auflaufbremsvorrichtung
- 7: Bremszug, Bremsgestänge
- 8: Handbremseinrichtung
- 9: Stützeinrichtung
- 10: Haubenteil
- 11: Bodenteil
- 12: Bodenöffnung, Schlitz
- 13: Bodenflansch
- 14: Federaufnahme
- 15: Hebelaufnahme
- 16: Rückwand
- 17: Haubenrand
- 18: Hebelöffnung
- 19: Befestigungsöffnung, Kreisloch
- 20: Befestigungsöffnung, Langloch
- 21: Steckeraufnahme
- 22: Stützradöffnung
- 23: Stützradbefestigung, Klemmeinrichtung
- 24: Stützradführung, Führungsnut
- 25: Zugrohraufnahme, Kartusche
- 26: Befestigung, Schraubverbindung
- 27: Zugrohr
- 28: Rohrachse
- 29: Stoßdämpfer
- 30: Befestigung, Schraubverbindung
- 31: Umlenkhebel
- 32: Federspeicher
- 33: Stellstange
- 34: Stützbolzen
- 35: Handbremshebel
- 36: Griff
- 37: Hebelachse, Hebellager
- 38: Ansatz, Federabstützung
- 39: Mitnehmer
- 40: Stellgriff, Knebel
- 41: Spannbacke
- 42: Befestigungsflansch
- 43: Schraubverbindung
- 44: Öffnungsrand
- 45: Spindelgehäuse, Schaft
- 46: Zugachse
- 47: Führungsöffnung
- 48: Rangiergriff
- 49: Verstelleinrichtung
- 50: Spindel, Kurbel
- 51: Stützrad
- 52: Ausleger
- 53: Stützbügel
- 54: Abreißseil
- 55: Öse

## Patentansprüche

1. Deichselhaube für eine Deichselanordnung von Anhängerfahrgestellen mit mehreren Deichselholmen, einer Anhängevorrichtung, einer Auflaufbremsvorrichtung und einer Handbremseinrichtung, dadurch **gekennzeichnet,** daß die Deichselhaube (2) als tragendes Kohlteil ausgebildet und zur Verbindung der Vorderenden der Deichselholme (3) vorgesehen ist.

2. Deichselhaube nach Anspruch 1, dadurch **gekennzeichnet,** daß die Deichselhaube (2) ein gewölbtes Haubenteil (10) und ein Bodenteil (11) aufweist, die als lasttragende Teile ausgebildet und fest miteinander verbunden sind, wobei das Bodenteil (11) mit dem oder den Deichselholmen (3) verbindbar ist.

3. Deichselhaube nach Anspruch 1 oder 2, dadurch **gekennzeichnet,** daß das Bodenteil (11) eine Öffnung (12) zur Aufnahme von Teilen der Anhängevorrichtung (4) und der Auflaufbremsvorrichtung (6) aufweist.

4. Deichselhaube nach Anspruch 3, dadurch **gekennzeichnet,** daß die Öffnung (12) schlitzförmig ausgebildet und mittig in Richtung der Zugachse (46) angeordnet ist.

5. Deichselhaube nach einem der Ansprüche 1 bis 4, dadurch **gekennzeichnet,** daß im Bereich der Öffnung (12) eine Aufnahme (25) für ein Zugrohr (27) der Auflaufbremsvorrichtung (6) angeordnet ist.

6. Deichselhaube nach Anspruch 5, dadurch **gekennzeichnet,** daß die Rohraufnahme (25) als vorgefertigte Lagerung für das Zugrohr (27) ausgebildet und mit dem Bodenteil (11) die Öffnung (12) überbrückend fest verbindbar ist.

7. Deichselhaube nach einem der Ansprüche 1 bis 6, dadurch **gekennzeichnet,** daß das Bodenteil (11) beidseits der Öffnung (12) abstehende Bodenflansche (13) mit Aufnahmen (14,15) für Teile der Handbremseinrichtung (8) und/oder der Auflaufbremsvorrichtung (6) aufweist.

8. Deichselhaube nach Anspruch 7, dadurch **gekennzeichnet,** daß der Handbremshebel (35) seitlich neben der Öffnung (12) und ein mit dem Handbremshebel (35) verbundener Federspeicher (32) im Bereich der Öffnung (12) angeordnet ist.

9. Deichselhaube nach Anspruch 7 oder 8, dadurch **gekennzeichnet,** daß im Zugrohr (27) ein Stoßdämpfer (29) angeordnet und lösbar (30) mit dem Zugrohr (27) und der Deichselhaube (2) verbunden ist.

10. Deichselhaube nach einem der Ansprüche 1 bis 9, dadurch **gekennzeichnet,** daß im Bereich der Öffnung (12) am Bodenteil (11) ein Umlenkhebel (31) neben dem Stoßdämpfer und gleichachsig mit dem Handbremshebel (35) drehbar (37) gelagert ist, der mit dem Zugrohr (27) und dem Bremszug (7) verbunden ist.

11. Deichselhaube nach einem der Ansprüche 1 bis 10, dadurch **gekennzeichnet,** daß der Handbremshebel (35) einen vorstehenden Ansatz (38) für den Federspeicher (32) und einen Mitnehmer (39) für den Umlenkhebel (31) aufweist.

12. Deichselhaube nach einem der Ansprüche 1 bis 11, dadurch **gekennzeichnet,** daß das Haubenteil (10) Öffnungen und Aufnahmen (18,19,20,21,22) für den Handbremshebel (35), für die Befestigung der Deichselholme (3), für den Elektrostecker und das das Stützrad aufweist.

13. Deichselhaube nach einem der Ansprüche 1 bis 12, dadurch **gekennzeichnet,** daß die Deichselhaube (2) eine verstellbare Stützradbefestigung (23) aufweist, die zwischen den Deichselholmen (3) angeordnet ist.

14. Deichselhaube nach Anspruch 13, dadurch **gekennzeichnet,** daß die Stützradbefestigung (23) eine an der Deichselhaube (2) beweglich gelagerte Spannbacke (41) aufweist, die den Schaft des Stützrads gegen das Haubenteil (10) und/oder das Bodenteil (11) spannt.

15. Deichselhaube nach Anspruch 13 oder 14, dadurch **gekennzeichnet,** daß die Deichselhaube (2) eine Stützradführung (24) aufweist.

16. Deichselhaube nach einem der Ansprüche 1 bis 15, dadurch **gekennzeichnet,** daß die Stützradeinrichtung (9) einen vorzugsweise verstellbaren Rangiergriff (48) aufweist.

17. Deichselhaube nach einem der Ansprüche 1 bis 16, dadurch **gekennzeichnet,** daß die Deichselhaube (2) aus Metallblech besteht.

18. Deichselhaube nach einem der Ansprüche 1 bis 17, dadurch **gekennzeichnet,** daß die Deichselhaube (2) im Design an das Zugfahrzeug und/oder den Anhänger angepaßt ist.

19. Deichselhaube nach einem der Ansprüche 1 bis 18, dadurch **gekennzeichnet,** daß die Deichselhaube (2) mit einer Zusatzabdeckung am rückwärtigen Ende kombinierbar ist.
